# EUROPEAN PATENT SPECIFICATION

(11) **EP 0 624 306 B1**
(45) Date of publication and mention of the grant of the patent: **15.09.1999**
(21) Application number: 94201243.6
(22) Date of filing: 04.05.1994
(51) Int. Cl.: A01B 29/04

(54) **A soil cultivating machine**
Bodenbearbeitungsmaschine
Machine de travail du sol

(30) Priority: 10.05.1993 NL 9300787
(43) Date of publication of application: 17.11.1994
(73) Proprietor: MAASLAND N.V., 3155 PD Maasland (NL)
(72) Inventor: van der Lely, Cornelis, CH-6300 ZUG (CH)
(74) Representative: Corten, Maurice Jean F.M.

(56) References cited:
- DE-A- 3 425 194
- FR-A- 2 015 081
- DATABASE WPI Section PQ, Week 8539, 8 November 1985 Derwent Publications Ltd., London, GB; Class P11, AN 241566 LIQ FERTILISERS RES 'SOIL CULTIVATION ROLLER' & SU-A-1 144 635 (15 03 85)

## Description

The present invention relates to a soil cultivating machine, in particular a rotary harrow, comprising a frame, soil working members, more particularly power driven rotatable soil working members, and a roller which extends through approximately the full working width of the machine, said roller being coupled adjustably in height to the frame by means of arms, such that at least part of the weight of the machine may be carried and which is assembled from a plurality of elements of a length which is considerably less than half the length of the roller.

Such a machine is known from the Dutch Patent Application NL-A-7806736. The known machine is perfectly suitable for pressing the worked soil in order to create a homogeneous seed bed over the full width of the cylindrical roller. It has the disadvantage that soil may stick to the roller.

From the French Patent Application no. 2 015 081 there is known a soil cultivating machine resting on the ground by means of depth control wheels and comprising a single practically cylindrical roller-like soil pressing device, which is orientated under an angle of more than 90° relative to the direction of operative travel. In this way the soil pressing device is subjected to a rotational speed differing from that corresponding to the forward motion of the machine. Sticking of earth to the roller surface may hereby be prevented. From the same document there is also known a roller, couplable to a tractor and comprising a plurality of roller elements which are each mounted to a frame part of the roller and which are each arranged at an angle to the longitudinal direction of said roller. The latter roller may simply be pulled by a tractor and is adapted for rolling soils without using a cultivating machine.

The German Offenlegungsschrift DE 34 25 194 discloses a plough fitted with a roller. The roller is hingeably coupled to the plough by means of the parallelogram structure and comprises two cylindrical roller elements of approximately half the length of the roller. The roller elements are arranged in the same position at an angle of more than 90° relative to the direction of operative travel of the machine, in order to encounter sidewardly directed forces resulting from the plough.

It is the object of the invention to arrive at a machine of the kind mentioned before, however, at least less prone to the mentioned disadvantage.

According to the invention, the object is achieved when the roller comprises a frame part extending in the longitudinal direction of the roller between arms thereof, to which frame part a plurality of roller elements is mounted, these roller elements being in the shape of a truncated cone and wherein the roller includes two mirror-inverted halves, each having a number of roller elements, each of said roller elements being rotatable about a shaft which is arranged at an angle to the longitudinal direction of the roller.

In this way a machine is achieved having the advantages described by the aforementioned French publication, however, still capable of carrying at least part of the weight of the machine. Moreover, the present construction is advantageous in that the overall length of the machine and the centre of gravity of the roller and of the machine remains close to the lifting hitch to the tractor. This allows the machine to be carried by relatively small tractors, or otherwise favourably allows combination with a further machine such as a drilling machine.

It is remarked that the present construction is also especially suitable for use in so-called "strip seeding", which means that the earth within the drilling strips should be pressed more than in between said strips, so that the seeds of the desired crop will be provided with emerging conditions which are more favourable than those for the seeds of weed, present in the earth between the drilling strips.

In accordance with a specific feature of the invention, it is then advantageous when one or more roller elements are mounted adjustably and lockably about an upwardly directed axis. This construction enables an adequate adaptation to different circumstances. A still further specific feature of the invention is the characteristic that the roller has a circumferential surface formed from plate material. Using such a circumference, the roller remains advantageously clean.

The invention, therefore, also relates to a soil cultivating machine comprising a frame, soil working members and a roller which extends through approximately the full working width of the machine, wherein the roller has a circumferential surface formed from plate material and is rotatable about a rotary shaft arranged obliquely with respect to the direction of operative travel.

In a further advantageous embodiment, the machine in accordance with the invention includes a roller having a circumferential surface which is mainly formed by rod-like or tubular elements. The roller surface with rod-like elements provides that the roller rotates in an advantageous manner, while the roller remains clean and the soil surface is advantageously worked at the same time. The invention, therefore, also relates to a soil cultivating machine comprising a frame, soil working members and a roller which extends through approximately the full working width of the machine, wherein the roller has a circumference which is mainly formed by rod-like or tubular elements and wherein the roller is rotatable about a rotary shaft arranged obliquely with respect to the direction of operative travel.

In accordance with the invention, the effects mentioned in the foregoing are expressed in a particularly good manner when the roller comprises a plurality of roller elements, each in the shape of a truncated cone. When a truncated roller element is in contact with a soil surface via the full length of the lowermost peripheral part, then, because of the different peripheral lengths near the ends of a roller element, friction with the soil surface is produced, which counteracts adherence of earth. The invention, therefore, also relates to a soil cultivating machine comprising a frame, soil working members and a roller which extends through approximately the full working width of the machine, the roller being assembled from a plurality of roller elements, each in the shape of a truncated cone. In accordance with the invention, an advantageous array of the roller elements is further obtained, when, seen in plan view, the roller elements each have a leading peripheral line which extends transversely to the direction of operative travel A of the machine. The invention, therefore, also includes a soil cultivating machine comprising a frame, soil working members and a roller which extends through approximately the full working width of the machine, the roller elements, seen in plan view, each having a leading peripheral line which extends transversely to the direction of operative travel A of the machine. In accordance with a further advantageous feature of the invention, the roller has a diameter of approximately 40 cms and, in operation, the soil cultivating machine is supported at least partly by the roller. The above-described roller construction has a particularly advantageous effect when the soil cultivating machine is a p.t.o.-driven rotary harrow.

For a better understanding of the invention and to show how the same may be carried into effect, reference will now be made, by way of example, to the accompanying drawings, in which:
Figure 1 is a plan view of the machine in accordance with the invention in the state in which it is coupled to the lifting hitch of a tractor;
Figure 2 is a view of a roller element, taken on the line II-II in Figure 1;
Figure 3 is a view of a roller element, taken on the line III-III in Figure 2;
Figure 4 is, on a smaller scale, a view of a roller element, taken on the line IV-IV in Figure 2;
Figure 5 is a rear view of a portion of a second embodiment of the roller in accordance with the invention;
Figure 6 is a plan view of a detail of an embodiment of the machine, in which the roller elements are provided such that they are jointly adjustable;
Figure 7 is a side view in the direction of the arrow VII in Figure 6, and
Figure 8 is a plan view of a still further embodiment of the roller, wherein the roller elements can jointly be adjusted.

In the drawings, corresponding components have been given the same reference numerals. In addition, the invention is in no way limited to the embodiments depicted and described here; they only serve to illustrate the inventive idea.

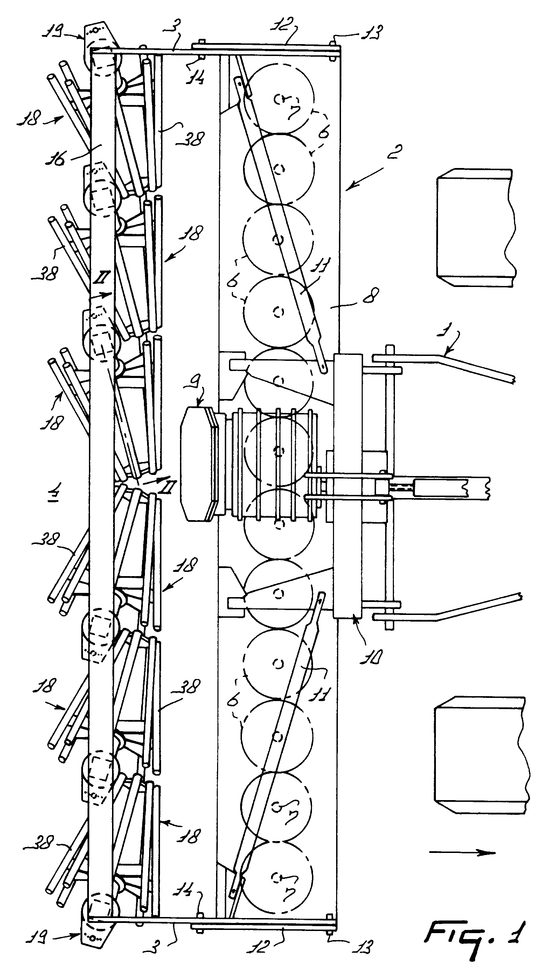

Figure 1 shows, coupled to the lifting hitch 1 of a tractor, a disc harrow 2, alternatively denoted p.t.o-driven rotary harrow, to the rear side of which a roller 4 is coupled via a pair of arms 3. The p.t.o-driven rotary harrow 2 is a known per se soil cultivating implement for the secondary soil working operation and, in the present embodiment which has a width of 3 metres, comprises twelve soil working members which are in meshing contact via gear-wheels 6 and are rotatable and drivable about upwardly directed shafts 7. The gearwheels 6 are accommodated in a box-like frame 8 of the p.t.o-driven rotary harrow and are provided on the upper end of the upwardly directed shafts 7 which extend through the bottom of the frame and are bearing-supported with respect to the frame 8. One of the two centre-most shafts 7 also extends through the upper side of the box-like frame 8 into the interior of a gearbox 9 which is mounted on the frame and whose outgoing stub axle may be coupled, for the purpose of driving the soil working members, to the power take-off shaft of a tractor via a coupling shaft. The machine is provided with a trestle 10 which is arranged in the midway point on the upper side of the frame 8 for coupling to the three-point lifting hitch 1 of a tractor. So as to make the machine more rigid, the upper side of the trestle is connected to the ends of the box-like frame 8 via struts 11. The box-like frame 8 is closed at both ends by an upwardly directed plate 12, which extends to above the frame and to which the arms 3 are pivotably connected. The connection consists of a pivot shaft 13 which is passed through the end plate at the upper side of the frame 8. The height of the frame relative to the roller 4 is adjustable by means of a locking pin 14 which can be inserted into any one of a plurality of apertures at the rear side of the machine.

Between the rear ends of the two arms 3 there extends, in the longitudinal direction of the roller 4 and at a square angle to the direction of operative travel A, a carrier 16 formed by a hollow beam having a square profile. The roller 4 includes two mirror-inverted halves, each having three roller elements 18 which are attached to the carrier 16 via upwardly directed supports 17 and each extend from their support 17 predominantly towards the imaginary roller centre line located in the direction of operative travel. The roller elements 18 are in the shape of truncated cones and are provided with an adjusting structure, with the aid of which the rotary shaft 20 of a roller element 18, seen in plan view, can be adjusted with respect to the direction of operative travel A.

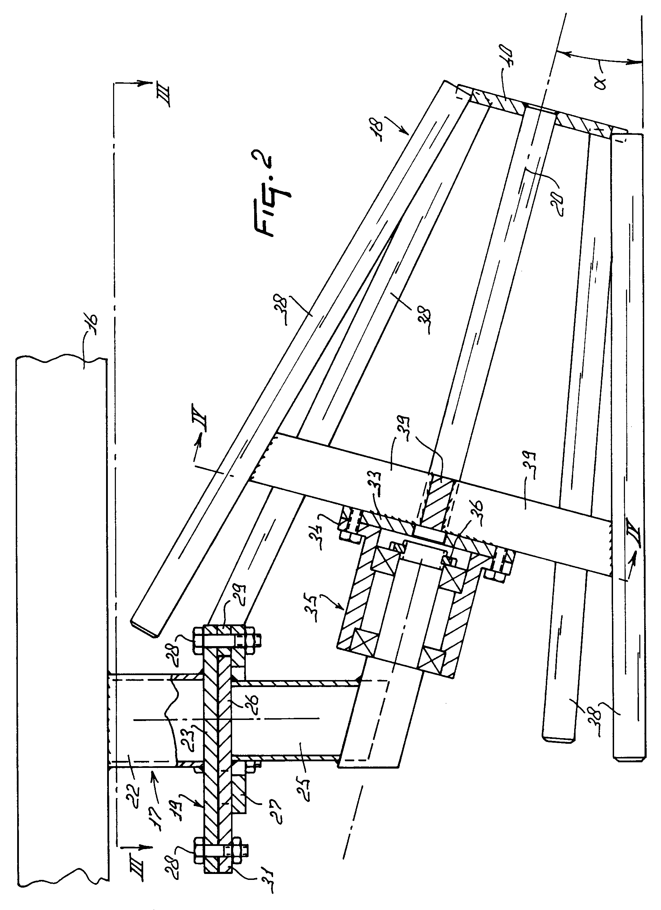

As can be seen from Figure 2, the rotary shaft 20 of the roller elements 18 is also placed at an angle α , which corresponds to the cone angle thereof, to a horizontal, and more specifically in such a manner that the lower line in the longitudinal direction of the circumference of the roller 4 extends in the horizontal direction. Figure 1 shows that the rotary shaft 20 can be positioned at a corresponding angle to the carrier 16 or, put differently, to a line transversely to the direction of operative travel A. To that end, the support 17 of a roller element 18 is provided with an adjusting structure 19. This structure 19 includes a horizontal disc 23 which is rigidly attached to the lower end of an upper support portion 22 and in which adjusting apertures 24 have been provided. The adjusting apertures 24 are arranged concentrically with respect to an imaginary axis of rotation of a lowermost supporting member 25. The lowermost supporting member 25 is disposed at the bottom side of the disc 23 via a flange 26 which bears on a supporting ring 27 that is connected to the disc. The supporting ring 27 is suspended from the disc by means of three bolts 28. Between the disc 23 and the supporting ring 27 there is an intermediate ring 29 which is also kept in position by the three bolts 28 and which is partly interrupted at the side facing the adjusting apertures 24. A lug 31 of the flange 26 of the lowermost supporting member 25 extends horizontally through the interruption in the intermediate ring 29. The flange 26 of the lowermost supporting member 25 is of a circular shape and is retained with an accurate fit by the intermediate ring 29. The lug 31 of the lower flange 26 is provided with an aperture, made at a distance which corresponds to the radial distance of the apertures 24 in the upper flange 23 with respect to the imaginary, vertical axis of rotation of the lower supporting member 25. A bolt or a locking pin can be inserted through this aperture to lock a roller element in one of the positions determined by the adjusting apertures 24. As is shown in Figure 1, when the bolt or locking pin is inserted in the centre adjusting aperture 24, a roller element is in a position in which the leading peripheral line of a roller element is at a square angle to the direction of operative travel. Using the remaining adjusting apertures 24, a roller element 18 can be adjusted from this centre position through an upwardly extending shaft through angles which correspond to half the cone angle α .

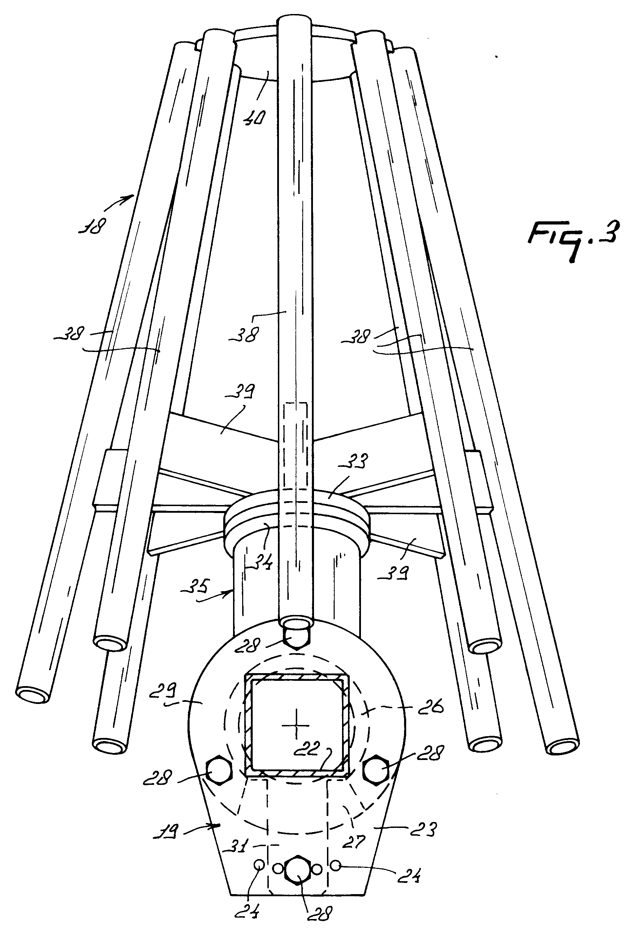

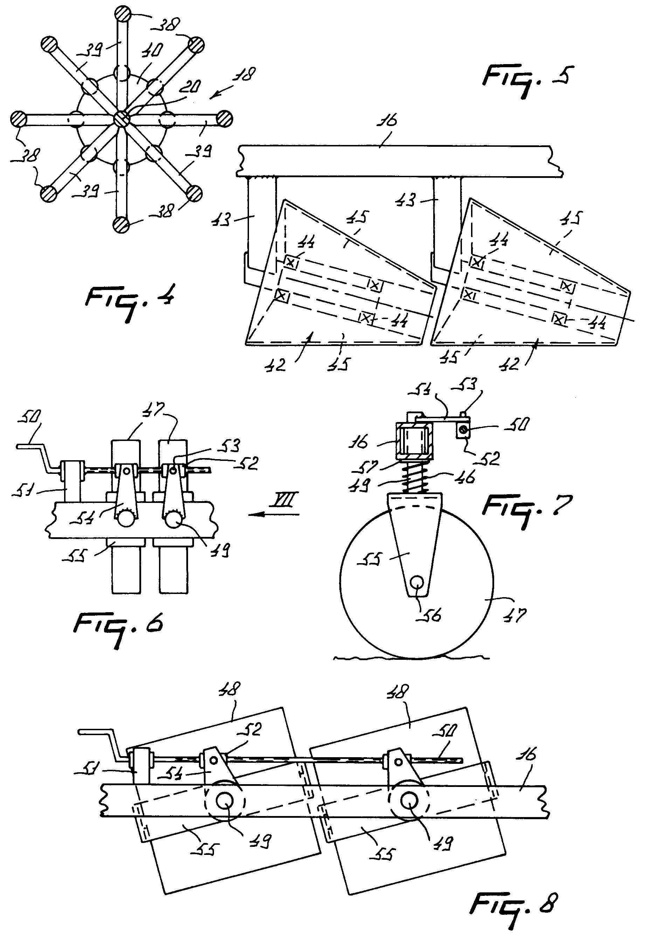

In the embodiment shown in Figures 1 to 3 of the roller, the roller elements 18 are open or, in other words, they are in the shape of a cage. In this embodiment, a roller element 18 is attached by means of a flange 33 placed at one end of the rotary shaft 20 against a flange 34 of a bearing housing 35. The bearing housing 35 is disposed on that end of the lower supporting member 25 that extends in the extension of the rotary shaft 20. The bearing housing 35 is locked by means of a locking nut 36 on the threaded free end of the supporting member 25. As is shown in Figure 4, an open roller element comprises eight rods 38 which define the circumference of the roller and are each positioned at the cone angle α , which amounts to 15°. The largest diameter of the circumference of a roller element 18 is 40 cms. At approximately one third of a rod length from the end of the largest roller circumference, each rod 38 is supported by a spoke 39 which radially extends from the rotary shaft 20 and is welded to the rotary shaft. That end of a rod 38 that is located near the smallest roller circumference is supported by a flange 40 which is provided at a square angle to the rotary shaft.

Figure 5 shows an embodiment of the roller, in accordance with the invention, comprising roller elements 42 which have a closed circumferential surface made of stainless plate steel. In accordance with the invention, instead thereof or in addition thereto, a different plate material, such as teflon, rubber or a hard plastics material, may alternatively be used. In this embodiment, a support 43 extends by means of one free end into the centre of the roller to beyond the lengthwise centre of the roller. A bearing housing is placed around this free end, which housing contains two facing, widely spaced-apart bearings 44. This bearing housing is provided with radially directed, plate-like triangular ribs for supporting the circumferential surface. The roller elements 42 of the invention as shown in Figure 5 are, for the sake of simplicity, not equipped with an adjusting device and, seen in plan view, are arranged in accordance with the embodiment shown in Figure 1.

Figures 6 to 8 show an embodiment of the machine in which cylindrically shaped roller elements 47, 48 are jointly adjustable about their upwardly directed supports 49. In such a construction, each of the two groups of roller elements 47, 48, which are formed by the mirror-inverted halves of the roller 4 as is shown in Figure 1 and described with reference thereto, can be adjusted with the aid of a single threaded spindle 50. To that end there is provided near a lateral end of the roller 4 the handle of the threaded spindle 50 which is arranged in the longitudinal direction next to the carrier 16 of the roller 4 and which extends to near the midway point of the roller 4. The threaded spindle 50 is attached to the carrier 16 via a holder 51. The threaded spindle 50 comprises a number of threaded bushings 52, each provided with a radially extending stub axle 53, which number is equal to the number of roller elements 47, 48. The roller elements are each pivotal about their upwardly directed support 49, which is passed through a fitting, upwardly directed aperture in the carrier 16. Near the upper end of a support 49 there is rigidly disposed a lever 54 which with a fitting aperture is provided such that it is pivotal about the stub axle 53 of the threaded bushing 52. This connection is locked by means of a locking pin which is not further shown in the drawings. The support 49 of a roller element in accordance with the construction shown in Figures 6 to 8 further includes a forked member 55, between whose legs the rotary shaft 56 of a roller element 47, 48 is fastened. Disposed between the forked member 55 and the carrier 16 and around the support 49 there is a spacer element in the form of a strong supporting spring 46, which pushes against the carrier 16 via a ring 57. Any compression of the spring 46 can be absorbed by the amount of clearance in the construction. As can be seen from Figures 6 and 7, the roller elements 18 can be very narrow, e.g. 7 cms wide, and are interspaced by 12 cms. The roller elements in accordance with the construction shown in Figure 8 have a width of approximately 43 cms and a mutual spacing of approximately 45 cms. For the purpose of an advantageous development on the soil the roller elements 47, 48 have rounded-off corners. The working width of the roller shown in Figure 1 is 3 metres.

The mode of operation of the rollers in accordance with the above-described construction is based on the friction with the soil which rollers of this type experience due to their oblique position relative to a line transverse to the direction of operative travel A. This friction ensures that earth does not stick to the roller, so that scrapers are no longer required. The roller elements 18, 42, 47, 48 are each disposed in groups of mirror-inverted halves of the roller 4 so as to render it possible to maintain a stable travel of the roller 4. Since the circumferential speed near the end having the small diameter exceeds that near the other end, there is as it were question of a driving portion and a driven portion of a roller element. Because of this drive mode, a conical roller element has an active pulverizing effect In all the said embodiments, a roller element remains relatively free from clogging earth and the roller has an adequate pulverizing and soil-compacting effect.

## Claims

1. A soil cultivating machine (2), in particular a rotary harrow, comprising a frame (8), soil working members, more particularly power driven rotatable soil working members, and a roller (4) which extends through approximately the full working width of the machine, which by means of arms (3) is coupled to the frame (8) adjustably in height, such that at least part of the weight of the machine may be carried and which is assembled from a plurality of elements (18) of a length which is considerably less than half the length of the roller (4), characterized in that the roller comprises a frame part (16) extending in the longitudinal direction of the roller between arms (3) thereof, to which frame part (16) a plurality of roller elements is mounted, these roller elements (18) being in the shape of a truncated cone and wherein the roller (4) includes two mirror-inverted halves, each having a number of roller elements (18), each of said roller elements being rotatable about a shaft (20) which is arranged at an angle to the longitudinal direction of the roller.

2. A soil cultivating machine as claimed in claim 1, characterized in that one or more roller elements (18) are mounted adjustably and lockably about an upwardly directed axis.

3. A soil cultivating machine as claimed in one or more of the preceding claims, characterized in that the roller (4) has a circumferential surface made of plate material.

4. A soil cultivating machine as claimed in one or more of the preceding claims, characterized in that the roller (4) has a circumferential surface which is predominantly formed by rod-like elements (38).

5. A soil cultivating machine as claimed in one or more of the preceding claims, characterized in that, seen in plan view, the roller elements (18) each have a leading circumferential line which extends transversely to the direction of operative travel A of the machine.

6. A soil cultivating machine as claimed in one or more of the preceding claims, characterized in that the roller elements (18) are rotatable about approximately horizontally extending shafts (56), in that the roller (4) is freely rotatable and has a diameter of approximately 40 cms, and in that two or more roller elements (18) are jointly adjustable.

## Patentansprüche

1. Bodenbearbeitungsmaschine (2), insbesondere Kreiselegge, mit einem Rahmen (8), mit Bodenbearbeitungsgliedern, insbesondere angetriebenen drehbaren Bodenbearbeitungsgliedern, und mit einer Walze (4), die sich annähernd über die gesamte Arbeitsbreite der Maschine erstreckt, die durch Arme (3) höhenverstellbar mit dem Rahmen (8) verbunden ist, so daß das Gewicht der Maschine zumindest teilweise abgestützt werden kann, und die aus mehreren Elementen (18) zusammengesetzt ist, deren Länge wesentlich geringer ist als die halbe Länge der Walze (4), dadurch gekennzeichnet, daß die Walze einen Rahmenteil (16) aufweist, der sich in Längsrichtung der Walze zwischen Armen (3) derselben erstreckt, und an dem mehrere Walzenelemente angebracht sind, die die Form eines Kegelstumpfes aufweisen, und wobei die Walze (4) zwei spiegelverkehrte Hälften aufweist, von denen jede mit einer Anzahl von Walzenelementen (18) versehen ist, wobei jedes der Walzenelemente um eine Achse (20) drehbar ist, die in einem Winkel zur Längsrichtung der Walze angeordnet ist.

2. Bodenbearbeitungsmaschine nach Anspruch 1, dadurch gekennzeichnet, daß eine oder mehrere Walzenelemente (18) an einer aufwärts gerichteten Achse verstellbar und festlegbar angeordnet sind.

3. Bodenbearbeitungsmaschine nach einem oder mehreren der vorhergehenden Ansprüche,
dadurch gekennzeichnet, daß die Walze (4) eine Mantelfläche aus Blech aufweist.

4. Bodenbearbeitungsmaschine nach einem oder mehreren der vorhergehenden Ansprüche,
dadurch gekennzeichnet, daß die Walze (4) eine Mantelfläche aufweist, die überwiegend durch stangenförmige Elemente (38) gebildet ist.

5. Bodenbearbeitungsmaschine nach einem oder mehreren der vorhergehenden Ansprüche,
dadurch gekennzeichnet, daß die Walzenelemente (18) in der Draufsicht jeweils eine vordere Begrenzungslinie aufweisen, die sich quer zur Arbeitsrichtung A der Maschine erstreckt.

6. Bodenbearbeitungsmaschine nach einem oder mehreren der vorhergehenden Ansprüche,
dadurch gekennzeichnet, daß die Walzenelemente (18) um etwa horizontal ausgerichtete Achsen (56) drehbar sind, daß die Walze (4) frei drehbar ist und einen Durchmesser von etwa 40 cm aufweist, und daß zwei oder mehr Walzenelemente (18) gemeinsam einstellbar sind.

## Revendications

1. Machine d'agriculture (2), en particulier une herse rotative, comportant un châssis (8), des éléments de travail du sol, plus particulièrement des éléments de travail du sol rotatifs entraînés par une force motrice, et un rouleau (4) qui s'étend approximativement à travers toute la largeur de travail de la machine, qui par l'intermédiaire de bras (3) est relié au châssis (8) de manière réglable en hauteur, de sorte qu'au moins une partie du poids de la machine peut être supportée, et qui est assemblé à partir d'une pluralité d'éléments (18) ayant une longueur qui est sensiblement plus petite que la moitié de la longueur du rouleau (4), caractérisée en ce que le rouleau comporte une partie de châssis (16) s'étendant dans la direction longitudinale du rouleau entre les bras (3) de celui-ci, partie de châssis (16) sur laquelle est montée une pluralité d'éléments de rouleau, ces éléments de rouleau (18) ayant la forme d'un cône tronqué, et le rouleau (4) comportant deux moitiés inversées selon des images miroir, ayant chacune plusieurs éléments de rouleau (18), chacun desdits éléments de rouleau étant rotatif autour d'un arbre (20) qui est agencé selon un angle par rapport à la direction longitudinale du rouleau.

2. Machine d'agriculture selon la revendication 1, caractérisée que ce qu'un ou plusieurs éléments de rouleau (18) sont montés de manière ajustable et verrouillable autour d'un axe dirigé vers le haut.

3. Machine d'agriculture selon la revendication 1 ou 2, caractérisée en ce que le rouleau (4) a une surface circonférentielle constituée d'un matériau en plaque

4. Machine d'agriculture selon l'une quelconque des revendications précédentes, caractérisée en ce que le rouleau (4) a une surface circonférentielle qui est formée de manière prédominante par des éléments analogues à une tige (38).

5. Machine d'agriculture selon l'une quelconque des revendications précédentes, caractérisée en ce que, vu de dessus, les éléments de rouleau (18) ont chacun une ligne circonférentielle avant qui s'étend transversalement à la direction d'un trajet actif A de la machine.

6. Machine d'agriculture selon l'une quelconque des revendications précédentes, caractérisée en ce que les éléments de rouleau (18) sont rotatifs d'autour d'arbres (56) s'étendant approximativement horizontalement, en ce que le rouleau (4) est librement rotatif et a un diamètre d'approximativement 40 cm, et en ce que deux ou plus de deux éléments de rouleau (18) peuvent être conjointement ajustés.
